(19) Europäisches Patentamt
European Patent Office
Office européen des brevets

(11) **EP 3 540 160 B1**

(12) **EUROPÄISCHE PATENTSCHRIFT**

(45) Veröffentlichungstag und Bekanntmachung des Hinweises auf die Patenterteilung:
**11.11.2020   Patentblatt 2020/46**

(51) Int Cl.:
*E05D 5/02* *(2006.01)*     *F16B 5/02* *(2006.01)*
*F16B 13/08* *(2006.01)*    *F16B 37/12* *(2006.01)*
*F16B 13/06* *(2006.01)*    *F16B 37/04* *(2006.01)*

(21) Anmeldenummer: **19161309.0**

(22) Anmeldetag: **07.03.2019**

(54) **BEFESTIGUNGSANORDNUNG ZUM BEFESTIGEN EINES TÜRBANDES AN EINEM HOHLKAMMER-PROFIL**

FASTENING ARRANGEMENT FOR FASTENING A DOOR HINGE ON A HOLLOW PROFILE

AGENCEMENT DE FIXATION PERMETTANT DE FIXER UNE PENTURE SUR UN PROFILÉ CREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2018   DE 202018101497 U**

(43) Veröffentlichungstag der Anmeldung:
**18.09.2019   Patentblatt 2019/38**

(73) Patentinhaber: **eds - electric drive solution GmbH & Co. KG**
**83703 Gmund (DE)**

(72) Erfinder:
• **Perplies, Heinz W.**
**90587 Veitsbronn (DE)**

• **Kettler, Frank**
**96176 Pfarrweisach (DE)**

(74) Vertreter: **Rau, Schneck & Hübner**
**Patentanwälte Rechtsanwälte PartGmbB**
**Königstraße 2**
**90402 Nürnberg (DE)**

(56) Entgegenhaltungen:
EP-A2- 1 669 533          DE-A1- 3 045 372
DE-C1- 19 607 029        DE-U1- 9 312 057
DE-U1- 20 018 984        DE-U1- 29 500 691
DE-U1-202005 011 168

**Beschreibung**

Die Erfindung betrifft eine Befestigungsanordnung zum Befestigen eines Türbandes, eines Türschließers oder anderer Komponenten an einem Hohlkammer-Profil gemäß dem Oberbegriff des Anspruchs 1, einen Türband-Bausatz zum Befestigen eines Türbandes und ein Befestigungssystem zum Befestigen eines Türbandes eines Türschließers oder anderer Komponenten.

Aus der gattungsgemäßen DE 196 07 029 C1 ist eine Befestigungsanordnung zum Befestigen eines Beschlages in einer Zarge aus einem Kunststoffprofil bekannt. Mittels des Beschlages ist ein Fenster- oder Türflügel schwenkbar befestigt. In das Kunststoffprofil ist ein Metallprofil eingesetzt. Eine Tragbuchse durchsetzt das Metallprofil und endet in der Zarge. In die Tragbuchse ist ein Gewindestift eingeschraubt, der eine Beschlag-Bandrolle trägt. Der Gewindestift schneidet sich mit seinem Gewinde in die Tragbuchse ein und endet in der Zarge. Gemäß einer bevorzugten Ausführungsform weist die Tragbuchse ein Außengewinde auf, das sich in die Bohrungen der Zarge und des Metallprofils einschneidet.

Aus der DE 295 00 691 U1 ist eine Schraubbefestigung für einen Griff bekannt. Ein entsprechendes Montageset umfasst eine Senkkopfschraube, die in einen Führungskörper mit Außengewinde eingeführt ist. Der Führungskörper hat in seinem Fußflansch eine Aussparung, die zur Aufnahme einer Spreizhülse dient. Diese ist mit einem Spreizkorb mit Keilflächen versehen, welche beim Verschrauben mit der Schraube an einer Konusmutter aufgleiten.

Die DE 30 45 372 A1 offenbart eine Befestigung eines Türbandes an wärmegedämmten Profilen.

Die DE 93 12 057 U1 offenbart einen Dübel für weiche Baustoffe, Bohrlochziegel oder dergleichen, der zwei Spreizteile umfasst. Eine Schraube wird in den Dübel eingeführt und in dessen Fußteil eingeschraubt.

Die DE 20 2005 011 168 U1 offenbart eine Vorrichtung zum Befestigen von Beschlägen an Mehrkammerprofilen von beispielsweise Türen oder Fenstern. Die Vorrichtung durchdringt mehrere parallele Kammerwandungen eines Mehrkammerhohlprofils. Sie umfasst ein Spannorgan, das als Bolzen mit wenigstens einem Gewindeabschnitt ausgebildet ist, und mehrere Hohlzylinderabschnitte mit Festsetzmitteln.

Die EP 1 669 533 A2 offenbart eine Befestigung für einen Beschlag an einem mit mehreren Kammern versehenen und mit einer Armierung ausgestatteten Hohlprofil. Eine Schraube weist zwei Gewindeabschnitten mit verschiedenen Gewindedurchmessern auf. Der im Durchmesser kleinere vordere Gewindeabschnitt greift in die Armierung des Hohlprofils ein, während der im Durchmesser größere Gewindeabschnitt in die Wandung einer Durchgangsbohrung am Beschlag eingreift.

Ein Türband für eine Glastür ist aus der DE 201 14 976 U1 bekannt. Eine Montageschraube zur Befestigung von Beschlagteilen ist aus der DE 20 2004 016 119 U1 bekannt. Eine Gebäudetür mit einem Spindelantrieb zum automatischen Öffnen und Schließen der Gebäudetür ist aus DE 10 2011 078 832 A1 und DE 10 2011 078 830 A1 bekannt.

Die DE 200 18 984 U1 offenbart eine Büchse für die Befestigung eines Beschlagteils an einem mit einem vorgesetzten Profilteil versehenen Hohlprofil. Die DE 27 00 100 A1 offenbart eine Anordnung und eine Abstandsbüchse zur Befestigung eines Beschlagteils an einem Hohlprofil.

Es wurde erkannt, dass ein Türband für eine Gebäudetür mit einem Spindelantrieb höher belastet wird, insbesondere wird das Türband radial zur Bandrollenachse höher belastet. Türbänder werden oft an Hohlkammer-Profilen mit einer Kunststoff-Profilklammer befestigt, sodass eine höhere Belastung der Kunststoff-Profilkammer auftritt, die gegebenenfalls durch Überbelastung zerstört werden kann. Insbesondere sind Kunststoff-Profilkammern immer elastisch. Mit einem Dübel wird eine Stabilität hergestellt, die Bewegungen verhindert.

Eine Aufgabe der vorliegenden Erfindung besteht darin, eine Befestigungsanordnung bereitzustellen, die eine gute Kraft-/Belastungsverteilung gewährleistet, sodass bei gegebener Profilgeometrie des Hohlkammer-Profils eine Belastung der Kunststoff-Profilkammer reduziert ist.

Diese Aufgabe wird mit einer Befestigungsanordnung mit den Merkmalen nach Anspruch 1 gelöst.

Die erfindungsgemäße Befestigungsanordnung umfasst mindestens eine Montageschraube zum Befestigen eines Türbandteils an einem Hohlkammer-Profil und mindestens eine Einschraubhülse zum Halten der Montageschraube, wobei eine Montageschraube in eine Einschraubhülse einschraubbar ist. Vorteilhafterweise ist jeder Montageschraube genau eine Einschraubhülse zugeordnet. Die Einschraubhülse umfasst einen Außengewindeabschnitt zum Einschrauben in das Hohlkammer-Profil und einen Innengewindeabschnitt zum Einschrauben der Montageschraube. Hierdurch wird eine bessere Kraft-/Belastungsverteilung erreicht, sodass die Belastung der Kunststoff-Profilkammer zumindest deutlich reduziert beziehungsweise keine Belastung der Kunststoff-Profilkammer auftritt.

Die Montageschraube der Befestigungsanordnung hat eine Länge, die im montierten Zustand größer ist als ein Abstand zweier in Längsrichtung der Montageschraube aufeinanderfolgender Armierungswände des Armierungsprofils. Die Montageschraube kann somit die beiden in Längsrichtung der Montageschraube aufeinanderfolgenden Armierungswände des Armierungsprofils im montierten Zustand durchdringen. Dies erhöht die Stabilität der Befestigung des Türbandes am Hohlkammer-Profil erheblich. Bei gegebenem Hohlkammer-Profil-Durchmesser und gegebenem Durchmesser des Armierungsprofils lassen sich somit auch schwere Türen über das Türband sicher lagern. Es können beispielsweise schwere Glastüren mit vergleichsweise filigranen Hohlkammer-Profilen verbaut werden, was zu einer sehr ansprechenden Türoptik führt. Es resultiert eine besonders vorteilhafte Kraft-/Belastungsverteilung. Insbesondere dadurch, dass die Montageschraube eine Länge $L_{MS}$ aufweist, die im montierten Zustand größer ist als der Abstand der in Längsrichtung der Montageschraube angeordneten führenden Armierungswand und die folgende Armierungswand des Armierungsprofils. Hierdurch können höhere Kräfte beziehungsweise eine höhere Belastung über das Armierungsprofil aufgenommen werden.

Die beiden aufeinanderfolgenden Armierungswände, deren Abstand kleiner ist als die Länge der Montageschraube, können als Abschnitte ein und derselben Profil-Armierungswand ausgebildet sein. Alternativ kann es sich bei den aufeinanderfolgenden Armierungswänden um voneinander separate Wände des Armierungsprofils handeln.

Vorteilhafterweise kann über eine derartige Anordnung der Montageschraube in der Einschraubhülse die Anpresskraft der Türdichtung am Hohlkammer-Profil stufenlos eingestellt werden.

Weiter vorteilhaft ist, dass der Abstand der Montageschrauben im Türband reduziert werden kann, sodass die Breite des Türbandes reduziert werden kann, Hierdurch werden die Gestaltungsmöglichkeiten des Türbandes erhöht.

Durch die Verwendung eines Dübels wird eine besonders vorteilhafte erfindungsgemäße Befestigungsanordnung bereitgestellt. Insbesondere wird die Kraft-/Belastungsverteilung weiter verbessert. Vorteilhafterweise kann die Montageschraube einfacher montiert werden. Gleichzeitig wird die Montageschraube im montierten Zustand durch den Dübel stabilisiert, sodass über die folgende Armierungswand die auftretende Belastung durch das Armierungsprofil aufgenommen werden kann.

Vorteilhafterweise ist jeder Montageschraube der Befestigungsanordnung ein Dübel zugeordnet.

Mit einer Befestigungsanordnung mit mindestens zwei Verbindungsstegen wird eine erfindungsgemäße Befestigungsanordnung bereitgestellt. Durch eine einteilige Ausführungsform der Einschraubhülse und des Dübels, nachfolgend Einschraubhülsen-Dübel genannt, wird eine erleichterte Montage ermöglicht. Gleichzeitig wird die Montagezeit reduziert.

Vorteilhafterweise wird durch die verformbaren, insbesondere flexiblen, Verbindungsstege gewährleistet, dass der einteilige Einschraubhülsen-Dübel für unterschiedliche Kunststoff-Profilkammergrößen verwendet werden kann.

Vorteilhafterweise besteht der Dübel selbst aus einem faserverstärkten, insbesondere glasfaserverstärkten, Kunststoff.

In einer vorteilhaften Ausführungsform kann das Armierungsprofil aus einem harten Kunststoff, einem faserverstärkten Kunststoff, insbesondere einem glasfaserverstärkten Kunststoff, oder einem Metall, insbesondere Stahl, bestehen.

Der in dieser Anmeldung verwendete Begriff Türband ist nicht einschränkend zu verstehen. Unter einem Türband ist auch ein Scharnier oder Beschlag für Fenster oder Türen zu verstehen.

Vorteilhafterweise weist das Hohlkammer-Profil mindestens eine Kunststoff-Profilkammer mit einem Armierungsprofil auf, wobei das Armierungsprofil in Längsrichtung der Montageschraube eine führende Armierungswand und eine folgende Armierungswand aufweist. Vorteilhafterweise sind die Einschraubhülse und die Montageschraube im montierten Zustand derart angeordnet, dass die Einschraubhülse sich durch die führende Armierungswand und die Montageschraube durch die führende Armierungswand und durch die folgende Armierungswand erstreckt.

Bei einer weiteren Ausführung kann anstelle des mindestens einen Armierungsprofils ein gegebenenfalls verstärktes Kunststoffprofil zum Einsatz kommen.

Mit einer Befestigungsanordnung nach Anspruch 2 wird erreicht, dass die Einschraubhülse einen stabilen Halt in dem Hohlkammer-Profil hat. Insbesondere erstreckt sich die Einschraubhülse durch die führende Armierungswand.

Mit einem selbstschneidenden Hülsen-Gewinde nach Anspruch 3 wird eine vereinfachte Montage der Einschraubhülse gewährleistet.

Mit einer Befestigungsanordnung nach Anspruch 4 wird eine besonders vorteilhafte Montageschraube bereitgestellt. Vorteilhafterweise erstreckt sich der Spitzen-Abschnitt der Montageschraube im montierten Zustand zumindest bereichsweise durch die folgende Armierungswand.

Ein verringerter Durchmesser des Spitzen-Abschnitts ist besonders beim Durchführen der Montageschraube durch die Einschraubhülse vorteilhaft. In einer besonders vorteilhaften Ausführungsform weist der Spitzen-Abschnitt einen Durchmesser $D_{SP}$ von ca. 8 mm und der Schaft-Abschnitt einen Durchmesser $D_{SC}$ von ca. 10 mm auf.

Mit einer Befestigungsanordnung nach Anspruch 6 wird eine besonders vorteilhafte Ausführungsform des Dübels bereitgestellt.

Mit einer Befestigungsanordnung nach Anspruch 7 wird eine weitere vorteilhafte Ausführungsform bereitgestellt, mit der die Kraft-/Belastungsverteilung weiter verbessert werden kann.

Mit einer Befestigungsanordnung nach Anspruch 8 wird eine weitere vorteilhafte Ausführungsform des Dübels bereitgestellt. Insbesondere ist das Spreizelement derart verformbar, sodass die Fläche an der das Spreizelement an einer Wand einer weiteren Kunststoff-Profilkammer vergrößert wird. Hierdurch wird der Halt des Dübels weiter verbessert. Gleichzeitig wird die Kraft-/Belastungsverteilung weiter verbessert.

Eine weitere Aufgabe der vorliegenden Erfindung besteht darin, ein Türband-Bausatz zum Befestigen eines Türbandes bereitzustellen.

Diese Aufgabe wird mit einem Türband-Bausatz nach Anspruch 9 gelöst.

Vorteilhafterweise weist das Türband einen reduzierten Abstand der Montageschrauben auf, sodass auch die Breite des Türbandes reduziert werden kann. Hierdurch werden einerseits die Einsatzmöglichkeiten erhöht und andererseits Kosten reduziert.

Vorteilhafterweise weist der Abstand der Montageschrauben weniger als 160 mm, insbesondere weniger als 100 mm, auf.

Eine weitere Aufgabe der vorliegenden Erfindung besteht darin, ein Befestigungssystem zum Befestigen eines Türbandes bereitzustellen.

Diese Aufgabe wird mit einem Befestigungssystem nach Anspruch 10 gelöst.

Vorteilhafterweise ist das Befestigungssystem derart ausgelegt, dass nun auch Türen beziehungsweise Fenster mit einem Spindelantrieb nachgerüstet werden können, bei denen dies bislang nicht möglich war, da das Hohlkammer-Profil hierfür nicht ausgelegt war.

Mit einem Befestigungssystem nach Anspruch 11 wird die Kraft-/Belastungsverteilung weiter verbessert.

Nachfolgend sollen Ausführungsbeispiele anhand der Figuren 1 bis 14 näher beschrieben werden. In diesen zeigen:

Fig. 1    eine schematische Schnittdarstellung einer nichterfindungsgemäßen Befestigungsanordnung für ein Türband, bei der sich eine Montageschraube im montierten Zustand befindet,

Fig. 2    eine Vorderansicht der Befestigungsanordnung nach Fig. 1,

Fig. 3    eine weitere schematische Schnittdarstellung einer nichterfindungsgemäßen Befestigungsanordnung für ein Türband mit einem Dübel nach einem ersten Ausführungsbeispiel, wobei eine Montageschraube in Vorbereitungsstellung ist,

Fig. 4    eine schematische Schnittdarstellung einer Befestigungsanordnung nach Fig. 3, wobei die Montageschraube im montierten Zustand ist,

Fig. 5    eine Ansicht der Befestigungsanordnung nach Fig. 3 unter Weglassung des Hohlkammer-Profils und des Türflügels,

Fig. 6    eine weitere Ansicht der Befestigungsanordnung nach Fig. 3 mit einem nicht-erfindungsgemäßen Dübel nach einem zweiten Ausführungsbeispiel,

Fig. 7    eine weitere Ansicht eines Dübels nach einem dritten erfindungsgemäßen Ausführungsbeispiel,

Fig. 8    eine Vorderansicht des Dübels nach Fig. 7,

Fig. 9    eine Ansicht des Dübels nach Fig. 7 in einem Armierungsprofil in Vorbereitungsstellung,

Fig. 10   in einer zu Fig. 9 ähnlichen Darstellungen des Dübels, wobei die Einschraubhülse im montierten Zustand ist,

Fig. 11   in einer zu Fig. 9 ähnlichen Darstellung des Dübels, wobei die Montageschraube in montiertem Zustand ist,

Fig. 12   eine Darstellung des Dübels nach einem vierten erfindungsgemäßen Ausführungsbeispiel in Vorbereitungsstellung,

Fig. 13   in einer zu Fig. 12 ähnlichen Darstellung des Dübels, wobei die Einschraubhülse in montiertem Zustand ist und

Fig. 14   in einer zu Fig. 12 ähnlichen Darstellung des Dübels, wobei die Montageschraube in montiertem Zustand ist

Die nachfolgend beschriebenen Ausführungsbeispiele beziehen sich auf eine Gebäudetür mit einem Spindelantrieb zum automatischen Öffnen und Schließen der Gebäudetür. Derartige Gebäudetüren sind aus der DE 10 2011 078 832 A1 und DE 10 2011 078 830 A1 bekannt.

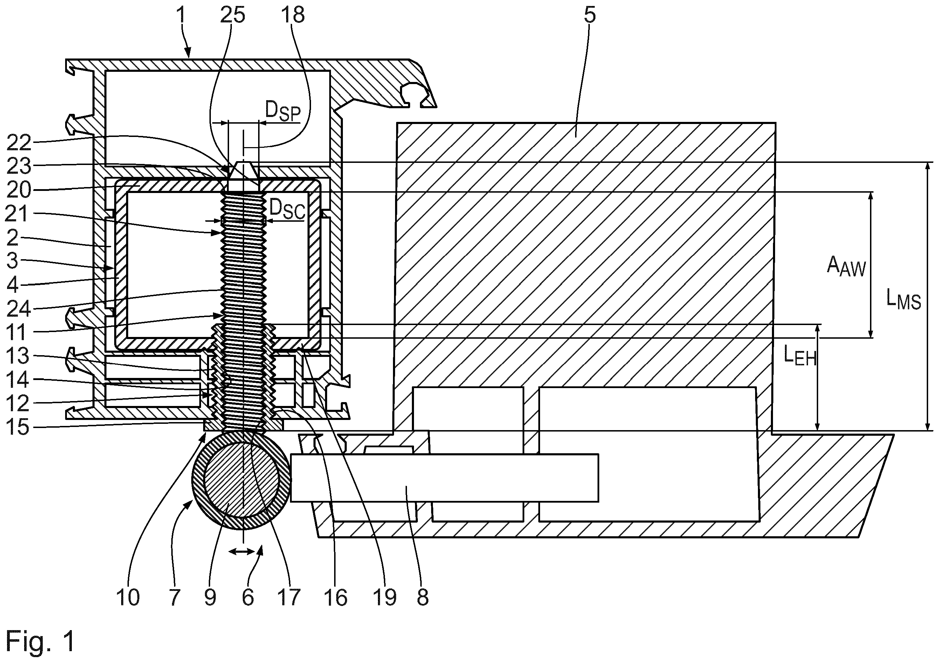

Die Fig. 1 zeigt ein Hohlkammer-Profil 1 aufweisend mindestens eine Kunststoff-Profilkammer 2, die ein Armierungsprofil 3 mit mindestens einer Armierungswand 4 aufweist. Das Hohlkammer-Profil 1 ist innerhalb eines nicht dargestellten Türrahmens angeordnet, indem ein schemenhaft angedeuteter Türflügel 5 eingehängt ist. Der Türflügel 5 wird in bekannter Größe der verwendeten Tür 5, beziehungsweise des verwendeten Fensters ist das Türband 6 unterschiedlich dimensioniert. Entsprechend den Anforderungen sind der Durchmesser $D_{SC}$ und der Durchmesser $D_{SP}$ an die Anforderungen angepasst. Bevorzugt beträgt der Durchmesser $D_{SC}$ 10 mm und der Durchmesser $D_{SP}$ 8 mm. Entsprechend ist die Anschlagsfläche 23 2 mm breit.

Der Schaft-Abschnitt 21 der Montageschraube 11 weist ein Schaft-Gewinde 24 auf, das sich zumindest bereichsweise über den Schaft-Abschnitt 21 erstreckt. Vorteilhafterweise erstreckt sich das Schaft-Gewinde 24 über den gesamten Schaft-Abschnitt 21. Das Schaft-Gewinde 24 ist je nach Ausführung der Einschraubhülse 12 als selbstschneidendes Gewinde ausgeführt. Insbesondere dann, wenn die Einschraubhülse 12 aus einem weichen Kunststoffmaterial besteht. Sofern die Einschraubhülse 12 aus einem faserverstärkten, insbesondere einem glasfaserverstärkten, Kunststoff oder einem Metall besteht, ist es vorteilhaft, wenn das Hülsen-Innengewinde 17 bereits vorgeformt ist. In diesem Fall muss das Schaft-Gewinde 24 nicht zwangsweise als selbstschneidendes Gewinde ausgeführt sein.

Der Spitzen-Abschnitt 22 erstreckt sich im montierten Zustand der Montageschraube 11 durch eine Bohrung 25 der folgenden Armierungswand 20. Das Ende des Spitzen-Abschnitts 22 ist konisch ausgeführt. Im gezeigten Ausführungsbeispiel kann der Spitzenabschnitt 22 ein Spitzen-Gewinde aufweisen. Ein Spitzen-Gewinde ist für dieses Ausführungsbeispiel nicht zwingend erforderlich.

Die Einschraubhülse 12 erstreckt sich im montierten Zustand durch die führende Armierungswand 19 und gleichzeitig erstreckt sich die Montageschraube 11 im montierten Zustand durch die Einschraubhülse 12 und durch die folgende Armierungswand 20. Durch diese Lagerung der Montageschraube 11 und der Einschraubhülse 12 wird eine verbesserte Kraft-/Belastungsverteilung auf das Hohlkammer-Profil 1, insbesondere der Kunststoff-Profilkammer 2, erreicht. Die Belastung der Kunststoff-Profilkammer 2 wird deutlich reduziert beziehungsweise die Kunststoff-Profilkammer 2 wird nicht belastet. Die Belastung wird hauptsächlich durch das Armierungsprofil 3 aufgenommen.

Darüber hinaus kann durch diese Anordnung der Anpressdruck auf eine nicht dargestellte Türdichtung über die Montageschraube 11 und die Einschraubhülse 12 angepasst werden, insbesondere kann die Anpassung stufenlos erfolgen.

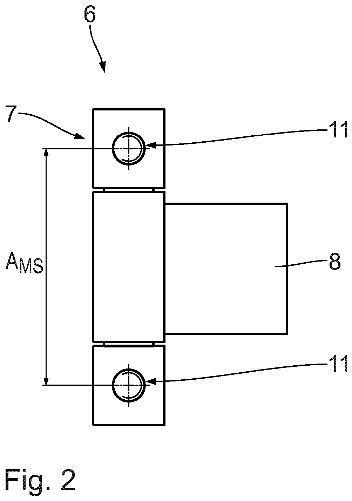

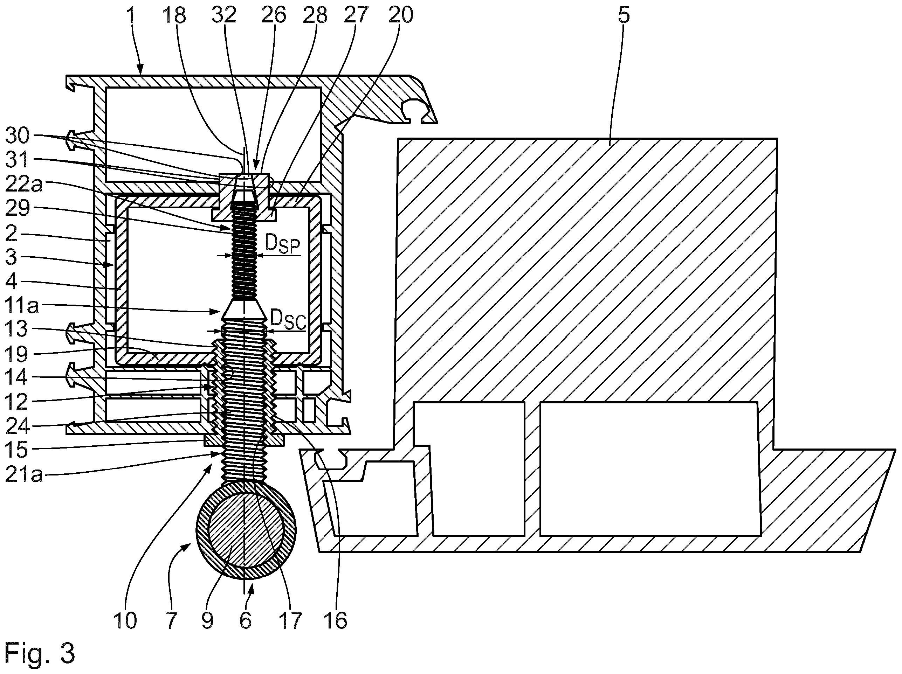

Anhand der Fig. 3 bis 5 wird nachfolgend ein weiteres Ausführungsbeispiel der Befestigungsanordnung 10 erläutert. Komponenten und Funktionen, die denjenigen entsprechen, die vorstehend unter Bezugsnamen auf die Fig. 1 und 2 bereits erläutert wurden, tragen die gleichen Bezugsziffern und werden nicht nochmals im Einzelnen diskutiert. Konstruktiv unterschiedliche, jedoch funktionell gleichartige Teile erhalten dieselbe Bezugszeichen mit einem nachgestellten "a".

In diesem Ausführungsbeispiel nach Fig. 3 ist zusätzlich ein Dübel 26 zum Stabilisieren der Montageschraube 11a vorgesehen. Es sei darauf hingewiesen, dass mit einem Dübel gemeint ist, dass jeder Montageschraube 11a ein Dübel zugeordnet ist. Somit kann die Befestigungsanordnung 10 mehrere Dübel 26 aufweisen. Der Dübel 26 weist einen Dübelkopf 27 und mindestens einen an dem Dübelkopf 27 anschließenden Spreizelement 28 auf. Das mindestens eine Spreizelement 28 ist dreiecksförmig ausgeführt. Der Dübel 26 ist im montierten Zustand an der folgenden Armierungswand 20 angeordnet. In diesem Zustand liegt der Dübelkopf 27 an einer zur Kunststoff-Profilkammer 2 zeigenden Seite der folgenden Armierungswand 20 an. Das Spreizelement 28 erstreckt sich durch die Bohrung 25 der folgenden Armierungswand 20.

Weiter zeigt die Fig. 3 eine Montageschraube 11a in Vorbereitungsstellung. Die Einschraubhülse 12 ist im montierten Zustand dargestellt. Die Montageschraube 11a unterscheidet sich von der Montageschraube 11 durch einen vergrößerten Spitzen-Abschnitt 22a und einen kürzeren Schaft-Abschnitt 21a. Der Spitzen-Abschnitt 22a weist ein Spitzen-Gewinde 29 auf. Letzteres wird zur Montage der Montageschraube 11a in den Dübel 26 eingeschraubt. Zwischen dem Schaft-Abschnitt 21a und dem Spitzen-Abschnitt 22a ist ein konisch geformter Übergangsbereich 30 vorgesehen. Die konische Gestaltung dient zur Zentrierung der Montageschraube 11a zur Vorbereitung zum Einschrauben der Montageschraube 11a, insbesondere des Schaft-Abschnitts 21a, in die Einschraubhülse 12.

Der Dübel 26 befindet sich in Vorbereitungsstellung, wobei das mindestens eine Spreizelement 28 in einer Ausgangsstellung ist. In dieser Ausgangsstellung ist die jeweils zur Montageschraube 11a zeigende Seite 30 keilförmig angeordnet, sodass eine sich verjüngende Öffnung 32 entsteht. Die jeweilige von der Montageschraube 11a abgewandte Seite 31 ist parallel zur Längsachse 18 der Montageschraube 11a angeordnet.

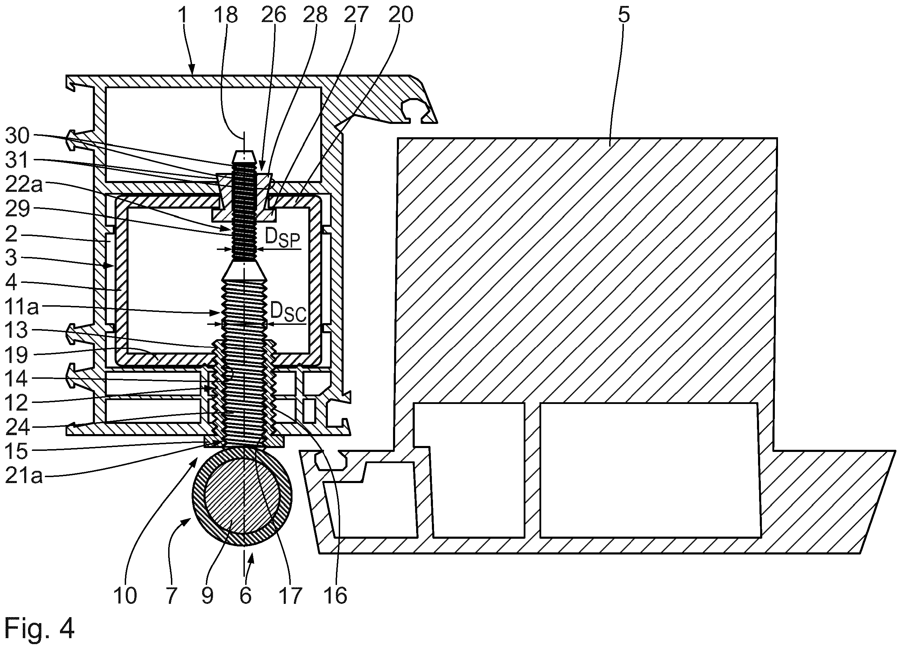

Fig. 4 zeigt eine Montageschraube 11a im montierten Zustand. Hierzu wird der Spitzen-Abschnitt 22a mit dem Spitzen-Gewinde 29 zumindest bereichsweise in den Dübel 26 eingeschraubt. Im Unterschied zu Fig. 3 ist die jeweilige Seite 30 parallel zur Längsachse 18 der Montageschraube 11a und die jeweilige von der Montageschraube 11a abgewandte Seite 31 keilförmig, sodass die abgewandte Seite 31 die folgende Armierungswand hinterschneidet. Hierdurch wird der Dübel 26 in der folgenden Armierungswand 20 verankert. In Folge dessen wird die auf die Montageschraube 11a wirkende Kraft über den Dübel 26 auf die folgende Armierungswand 20 und so auch auf das Armierungsprofil 3 abgeleitet. Die auf die Kunststoff-Profilkammer 2 wirkende Belastung ist reduziert.

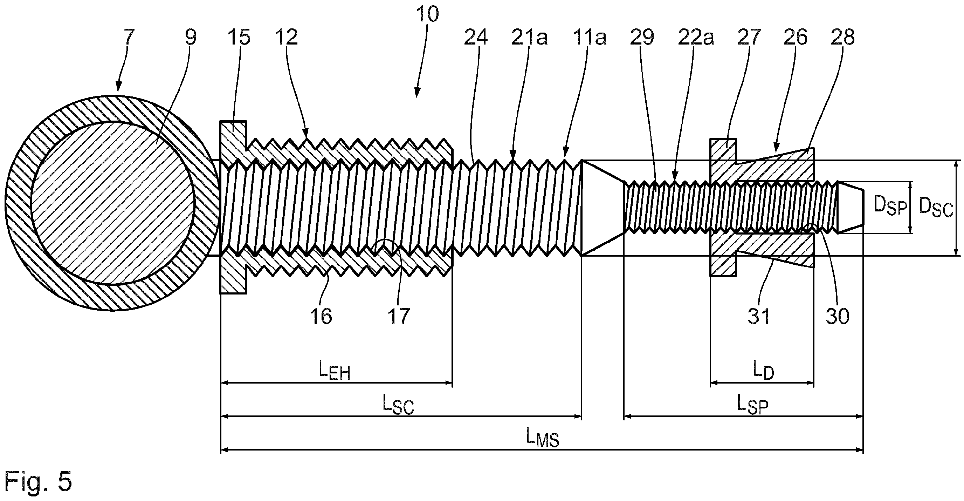

Fig. 5 zeigt eine Befestigungsanordnung 10 nach Fig. 4 unter Weglassung des Hohlkammer-Profils 1, der Kunststoff-Profilkammer 2, des Armierungsprofils 3 mit der Armierungswand 4, der Tür 5 und des Türbandes 6. Wie bereits erwähnt weist die Einschraubhülse 12 eine Länge $L_{EH}$ und die Montageschraube 11a einen Schaft-Abschnitt 21a mit einer Länge Lsc und einen Spitzen-Abschnitt 22a mit einer Länge $L_{SP}$ auf. Der Dübel 26 weist eine Dübel-Länge $L_D$. Die einzelnen Komponenten sind je nach Anforderung unterschiedlich dimensioniert. Grundsätzlich gilt jedoch Länge $L_{EH}<$ Länge $L_{SC}$ und Dübel-Länge $L_D<$ Länge $L_{SP}$. Zudem gilt Durchmesser $D_{SP}<$ Durchmesser $D_{SC}$.

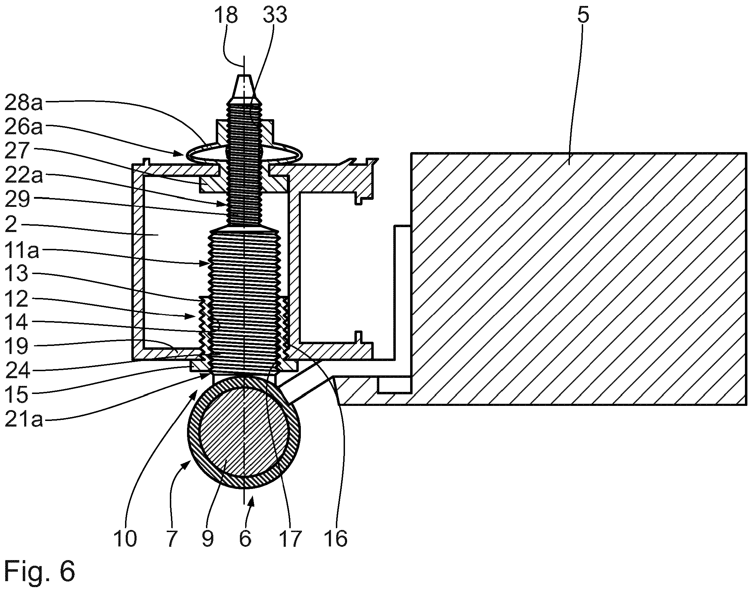

Anhand der Fig. 6 wird nachfolgend unter Weglassung eines Hohlkammer-Profils 1 ein zweites Ausführungsbeispiel des Dübels 26 erläutert. Komponenten und Funktionen, die denjenigen entsprechen, die vorstehend unter Bezugnahme auf die Fig. 1 bis 5 bereits erläutert wurden, tragen die gleichen Bezugsziffern und werden nicht nochmals im Einzelnen diskutiert. Konstruktiv unterschiedliche, jedoch funktionell gleichartige Teile erhalten dieselben Bezugszeichen mit einem nachgestellten "a".

Ein Dübel 26a weist einen Dübelkopf 27, mindestens ein an dem Dübelkopf 27 anschließenden Spreizelement 28a und an dem mindestens ein Spreizelement 28a anschließendes Dübelgewinde 33 auf. Im montierten Zustand der Montageschraube 11a wird das mindestens eine Spreizelement 28a derart verformt, dass das mindestens eine Spreizelement 28a bereichsweise an einer von der Kunststoff-Profilkammer 2 zeigenden Seite der Kunststoff-Profilkammer 2 anliegt.

Bei einer Verwendung eines Dübels 26a ist das Armierungsprofil 3 nicht zwingend erforderlich. Infolgedessen kann die Befestigungsanordnung auch bei Hohlkammer-Profilen 1 ohne ein Armierungsprofil 3 verwendet werden. Hierdurch werden die Anwendungsmöglichkeiten für die Befestigungsanordnung 10 erweitert.

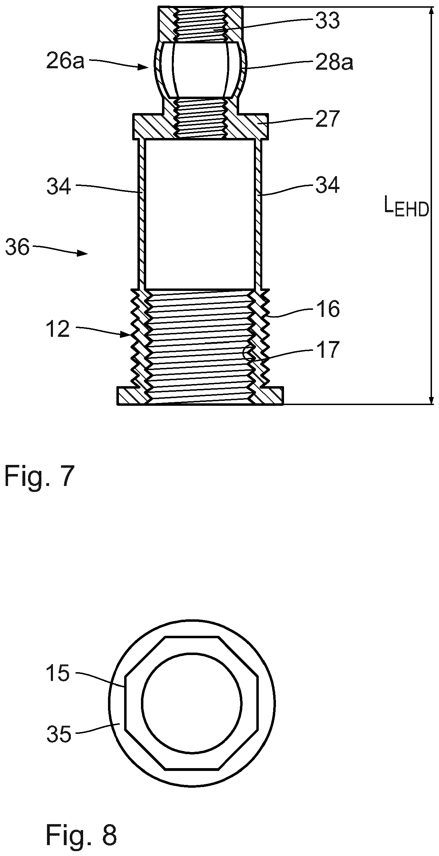

Anhand der Fig. 7 und 8 wird nachfolgend ein drittes Ausführungsbeispiel des Dübels 26 erläutert. Komponenten und Funktionen, die denjenigen entsprechen, die vorstehen unter Bezugnahme auf die Fig. 1 bis 6 bereits erläutert wurden, tragen die gleichen Bezugsziffern und werden nicht nochmals im Einzelnen diskutiert.

In diesem Ausführungsbeispiel ist der Dübel 26a über mindestens zwei Verbindungsstege 34 mit der Einschraubhülse 12 verbunden, wobei die Verbindungsstege 34 verformbar, insbesondere flexibel sind. Eine derartige einteilige Ausführung des Dübels 26a mit der Einschraubhülse 12, als Einschraubhülsen-Dübel 36, erlaubt einerseits eine Anpassung an unterschiedliche Größen der Kunststoff-Profilkammer 2 und andererseits eine vereinfachte Montage. Zudem wird die Montagezeit verkürzt. Die mindestens zwei Verbindungsstege 34 sind zwischen dem Ende der Einschraubhülse 12 und dem Dübelkopf 27 angeordnet. Vorteilhafter Weise besteht der Dübel 26a aus einem glasfaserverstärkten Kunststoff. Der Einschraubhülsenkopf 15 ist als Sechskantschraubkopf ausgeführt und weist eine umlaufende Auflagefläche 35 für ein Werkzeug auf (Fig. 8).

Äquivalent kann bei dem Einschraubhülsen-Dübel 36 anstelle des Dübels 26a auch der Dübel 26 mit mindestens einem Spreizelement 28 verwendet werden.

Unabhängig vom verwendeten Dübel 26 oder 26a ist jeder Montageschraube 11a genau ein Einschraubhülsen-Dübel 36 zugeordnet. Infolgedessen kann die Befestigungsanordnung 10 mehrere Einschraubhülsen-Dübel 36 aufweisen.

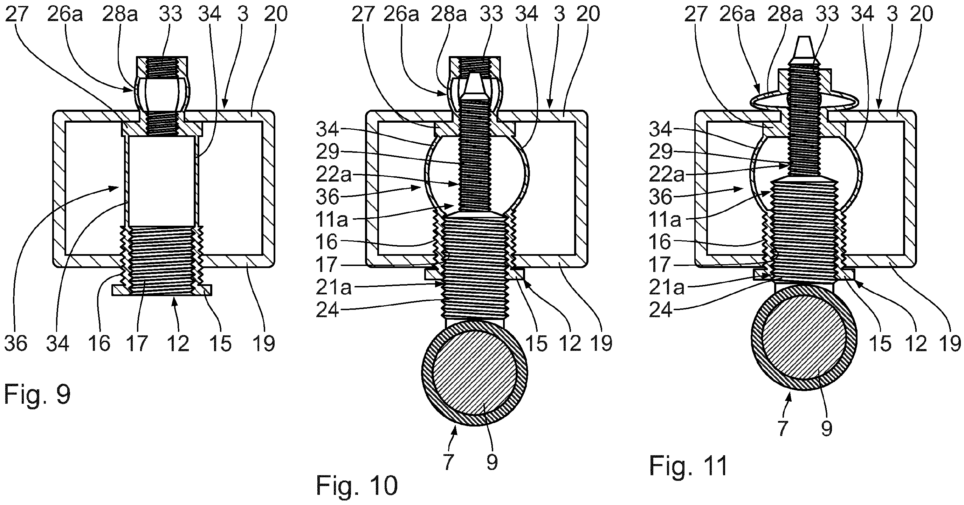

Nachfolgend soll anhand den Fig. 9 bis 11 unter Weglassung einzelner Komponenten, die in den Fig. 1 bis 8 erläutert wurden, einzelne Montageschritte der Befestigungsanordnung 10 kurz erläutert werden. Komponenten und Funktionen, die denjenigen entsprechen, die vorstehend unter Bezugnahme auf die Fig. 1 bis 8 bereits erläutert wurden, tragen die gleichen Bezugsziffern und werden nicht nochmals im Einzelnen diskutiert.

Bei dem dargestellten Profil kann es sich um ein Armierungsprofil 3 für ein Hohlkammer-Profil 1 handeln.

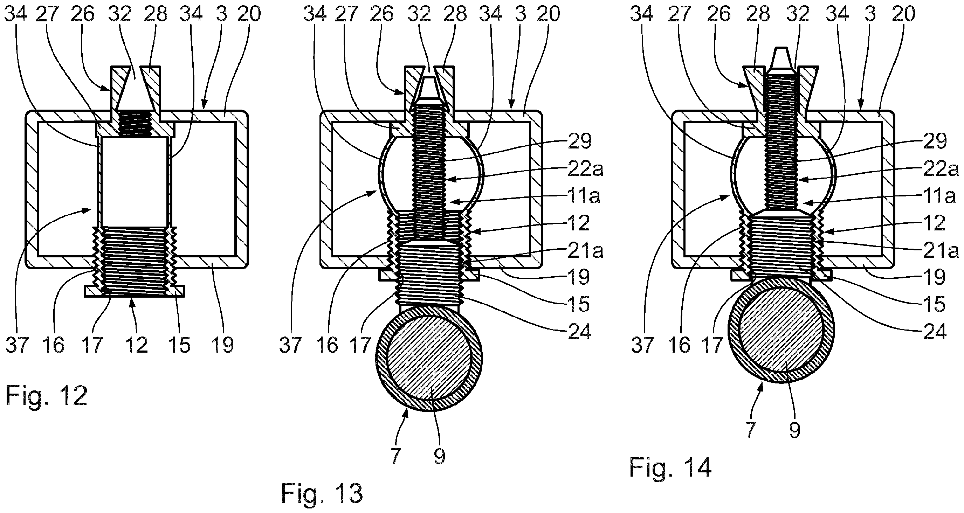

Das Hohlkammer-Profil 1 kann dem Hohlkammer-Profil 1 nach Fig. 12 entsprechen.

Anstelle des in den Fig. 9 bis 14 gezeigten Armierungsprofils 3 kann auch ein verstärktes Kunststoffprofil zum Einsatz kommen.

Die Fig. 9 zeigt einen einteiligen Einschraubhülsen-Dübel 36 mit dem Dübel 26a in Vorbereitungsstellung im Armierungsprofil 3. Der Abstand $A_{AW}$ der führenden Armierungswand 19 zu der folgenden Armierungswand 20 ist kleiner als die Länge $L_{EHD}$ des Einschraubhülsen-Dübels 36. Der Einschraubhülsenkopf 15 liegt nicht an der führenden Armierungswand 19 an. Die mindestens zwei Verbindungsstege 34 sind nicht verformt und liegen parallel zueinander. Der Dübelkopf 27 liegt an der zur Kunststoff-Profilkammer 2 zeigenden Seite der folgenden Armierungswand 20 an. Das mindestens eine Spreizelement 28a sind derart verformt, dass der Dübel 26a an der folgenden Armierungswand 20 positioniert werden kann.

Fig. 10 zeigt die Einschraubhülse 12 im montierten Zustand und die Montageschraube 11a in Vorbereitungsstellung. Um die Einschraubhülse 12 im montierten Zustand zu überführen, wird der Einschraubhülsenkopf 15 bis zum Anschlag an das Armierungsprofil 3, insbesondere an der führenden Armierungswand 19, geschraubt. In dieser Position sind die mindestens zwei Verbindungsstege 34 konvex zur Längsachse 18 der Montageschraube 11a. Das Schaftgewinde 24 greift teilweise im Hülsen-Gewinde 17 ein.

Fig. 11 zeigt die Einschraubhülse 11 und die Montageschraube 11a im montierten Zustand. Um die Montageschraube 11a im montierten Zustand zu überführen, wird das Schaftgewinde 24 weiter im Hülsen-Innengewinde 17 eingeschraubt. Gleichzeitig greift das Spitzen-Gewinde 29 im Dübelgewinde 33 ein. Hierdurch wird das mindestens eine Spreizelement 28a derart verformt, dass diese bereichsweise flächig an einer Wand einer weiteren Kunststoff-Profilkammer anliegt.

Nachfolgend wird anhand den Fig. 12 bis 14 unter Weglassung einzelner Komponenten, die in den Fig. 1 bis 8 erläutert wurden, die Montage einer Befestigungsanordnung 10 mit einem Dübel 26 kurz erläutert. Komponenten und Funktionen, die denjenigen entsprechen, die vorstehend unter Bezugnahme auf die Fig. 1 bis 11 bereits erläutert wurden, tragen die gleichen Bezugsziffern und werden nicht nochmals im Einzelnen diskutiert.

Fig. 12 zeigt einen Einschraubhülsen-Dübel 37 mit einem Dübel 26. Der Abstand $A_{AW}$ der führenden Armierungswand 19 zu der folgenden Armierungswand 20 ist kleiner als die Länge $L_{EHD}$. Der Einschraubhülsenkopf liegt nicht am Armierungsprofil 3, insbesondere an der führenden Armierungswand 19, an. Die mindestens zwei Verbindungsstege 34 sind nicht verformt und liegen parallel zueinander. Der Dübelkopf 27 liegt an der Kunststoff-Profilkammer 2 zeigenden Seite der folgenden Armierungswand 20 an. Das mindestens eine Spreizelement 28 ist derart keilförmig, sodass eine sich verjüngende Öffnung 32 entsteht.

Fig. 13 zeigt die Einschraubhülse 12 im montierten Zustand und die Montageschraube 11a in Vorbereitungsstellung. Um die Einschraubhülse 12 in den montierten Zustand zu überführen, wird der Einschraubhülsenkopf 15 bis zum Anschlag an das Armierungsprofil 3, insbesondere an der führenden Armierungswand 19, eingedreht. In dieser Position sind die mindestens zwei Verbindungsstege 34 konvex zur Längsachse 18 der Montageschraube 11a verformt. Das Schaftgewinde 24 greift teilweise im Hülsen-Innengewinde 17 ein. Das Ende des Spitzen-Abschnitts 22 ist im Dübelkopf 27 gelagert.

Fig. 14 zeigt die Einschraubhülse 12 und die Montageschraube 11a im montierten Zustand um die Montageschraube im montierten Zustand zu überführen, wird das Schaftgewinde 24 weiter im Hülsen-Innengewinde 17 eingeschraubt. Hierdurch wird der Spitzen-Abschnitt 22 weiter in den Dübel 26 eingeschraubt, sodass das mindestens eine Spreizelement 28 nach Außen gedrückt wird, sodass der Dübel 26 verankert wird.

**Patentansprüche**

1. Befestigungsanordnung zum Befestigen eines Türbandes (6) an einem Hohlkammer-Profil (1) aufweisend mindestens eine Kunststoff-Profilkammer (2), die ein Armierungsprofil (3) mit mindestens einer Armierungswand (4) aufweist,

   - mit mindestens einer Montageschraube (11a) zum Befestigen eines Türbandteils (7) am Hohlkammer-Profil (1) und
   - mit mindestens einer Einschraubhülse (12) zum Halten der Montageschraube (11a) aufweisend

     -- einen Außengewindeabschnitt (13) zum Einschrauben in das Hohlkammer-Profil (1) und
     -- einen Innengewindeabschnitt (14) zum Einschrauben der Montageschraube (11a),

   - wobei die mindestens eine Montageschraube (11a) in die Einschraubhülse (12) einschraubbar ist,
   - wobei die Montageschraube (11a) eine Länge ($L_{MS}$) aufweist, die im montierten Zustand größer ist als ein Abstand ($A_{AW}$) zweier in Längsrichtung der Montageschraube (11a) aufeinanderfolgender Armierungswände (4) des Armierungsprofils (3),

   **gekennzeichnet durch**

   - einen Dübel (26a) zum Stabilisieren der Montageschraube (11a), wobei der Dübel (26a) im montierten Zustand an der folgenden Armierungswand (20) angeordnet ist und
   - mindestens zwei Verbindungsstege (34) zum Verbinden der Einschraubhülse (12) mit dem Dübel (26a), wobei die Verbindungsstege (34) verformbar sind.

2. Befestigungsanordnung nach Anspruch 1, **dadurch gekennzeichnet, dass** die Einschraubhülse (12) eine Länge ($L_{EH}$) derart aufweist, dass sie sich im montierten Zustand zumindest bereichsweise durch die Armierungswand (4) erstreckt.

3. Befestigungsanordnung nach Anspruch 1 oder 2, **dadurch gekennzeichnet, dass** das Hülsen-Außengewinde (17) der Einschraubhülse (12) als selbstschneidendes Hülsen-Außengewinde (17) ausgeführt ist.

4. Befestigungsanordnung nach einem der Ansprüche 1 bis 3, **dadurch gekennzeichnet, dass** die Montageschraube (11a) einen Spitzen-Abschnitt (22a) mit einem Durchmesser ($D_{SP}$) und einen Schaft-Abschnitt (21a) mit einem Durchmesser ($D_{SC}$) aufweist, wobei gilt: $D_{SP} < Dsc$.

5. Befestigungsanordnung nach Anspruch 4, **dadurch gekennzeichnet, dass** sich der Spitzen-Abschnitt (22a) der Montageschraube (11a) im montierten Zustand zumindest bereichsweise durch die folgende Armierungswand (20) hindurch erstreckt.

6. Befestigungsanordnung nach einem der vorherigen Ansprüche, **dadurch gekennzeichnet, dass** der Dübel (26a) einen Dübelkopf (27) und mindestens ein an den Dübelkopf (27) anschließendes Spreizelement (28a) aufweist, wobei im montierten Zustand des Dübels (26a) der Dübelkopf (27) an der Armierungswand (4, 20) anliegt und das mindestens eine Spreizelement (28a) sich durch die Armierungswand (4, 20) erstreckt.

7. Befestigungsanordnung nach einem der vorherigen Ansprüche, **dadurch gekennzeichnet, dass** der Spitzen-Abschnitt (22a) ein Spitzen-Gewinde (29) aufweist, wobei im montierten Zustand der Montageschraube (11a) das Spitzen-Gewinde (29) in den Dübel (26a) zumindest bereichsweise eingreift.

8. Befestigungsanordnung nach Anspruch 6, **dadurch gekennzeichnet, dass** am freien Ende des mindestens einen Spreizelements (28a) ein Dübel-Gewinde (33) vorgesehen ist.

9. Türband-Bausatz zum Befestigen eines Türbandes (6) aufweisend

   - ein Türband (6) mit einem ersten Türband-Teil (7) und einem zweiten Türbandteil (8) und
- eine Befestigungsanordnung (10) zum Befestigen des Türbandes (6) nach einem der Ansprüche 1 bis 8.

10. Befestigungssystem zum Befestigen eines Türbandes (6) aufweisend

- ein Hohlkammer-Profil (1) mit mindestens einer Kunststoff-Profilkammer (2) mit einem Armierungsprofil (3), wobei das Armierungsprofil (3) in Längsrichtung einer Montageschraube (11a) eine führende Armierungswand (19) und eine folgende Armierungswand (20) aufweist,
- ein an dem Hohlkammer-Profil (1) anzubringendes Türband (6) und
- eine Befestigungsanordnung (10) zum Befestigen eines Türbandes (6) nach einem der Ansprüche 1 bis 8.

11. Befestigungssystem nach Anspruch 10, **dadurch gekennzeichnet, dass** die führende Armierungswand (19) und die folgende Armierungswand (20) in Längsrichtung der mindestens einen Montageschraube (11a) einen Abstand ($A_{AW}$) aufweisen, wobei gilt: $A_{AW} < L_{MS}$.

**Claims**

1. Fastening arrangement for fastening a door hinge (6) to a hollow-chamber profile (1) comprising at least one plastic-profile chamber (2) which comprises a reinforcing profile (3) with at least one reinforcing wall (4),

- having at least one mounting screw (11a) for fastening a door hinge part (7) to the hollow-chamber profile (1), and
- having at least one screw-in sleeve (12) for holding the mounting screw (11a), comprising

-- an external thread portion (13) for screwing into the hollow-chamber profile (1), and
-- an internal thread portion (14) for screwing in the mounting screw (11a),

- wherein the at least one mounting screw (11a) can be screwed into the screw-in sleeve (12),
- wherein the mounting screw (11a) has a length ($L_{MS}$) which, in the mounting state, is greater than a distance ($A_{AW}$) between two reinforcing walls (4) of the reinforcing profile (3) which follow one another in the longitudinal direction of the mounting screw (11a),

**characterized by**

- a dowel (26a) for stabilizing the mounting screw (11a), wherein the dowel (26a), in the mounted state, is arranged on the following reinforcing wall (20), and
- at least two connection webs (34) for connecting the screw-in sleeve (12) to the dowel (26a), wherein the connection webs (34) are deformable.

2. Fastening arrangement according to Claim 1, **characterized in that** the screw-in sleeve (12) has a length ($L_{EH}$) such that, in the mounting state, it extends at least in certain regions through the reinforcing wall (4).

3. Fastening arrangement according to Claim 1 or 2, **characterized in that** the sleeve external thread (17) of the screw-in sleeve (12) is configured as a self-cutting sleeve external thread (17).

4. Fastening arrangement according to one of Claims 1 to 3, **characterized in that** the mounting screw (11a) has a tip portion (22a) with a diameter ($D_{SP}$) and a shank portion (21a) with a diameter (Dsc), where the following holds: $D_{SP} < D_{SC}$.

5. Fastening arrangement according to Claim 4, **characterized in that** the tip portion (22a) of the mounting screw (11a), in the mounting state, extends at least in certain regions through the following reinforcing wall (20).

6. Fastening arrangement according to one of the preceding claims, **characterized in that** the dowel (26a) comprises a dowel head (27) and at least one spreading element (28a) which adjoins the dowel head (27), wherein, with the dowel (26a) in the mounted state, the dowel head (27) bears against the reinforcing wall (4, 20) and the at least one spreading element (28a) extends through the reinforcing wall (4, 20).

7. Fastening arrangement according to one of the preceding claims, **characterized in that** the tip portion (22a) has a tip thread (29), wherein, with the mounting screw (11a) in the mounting state, the tip thread (29) engages in the dowel (26a) at least in certain regions.

8. Fastening arrangement according to Claim 6, **characterized in that a** dowel thread (33) is provided at the free end of the at least one spreading element (28a).

9. Door hinge kit for fastening a door hinge (6), comprising

- a door hinge (6) with a first door hinge part (7) and a second door hinge part (8), and
- a fastening arrangement (10) for fastening the door hinge (6) according to one of Claims 1 to 8.

**10.** Fastening system for fastening a door hinge (6), comprising

- a hollow-chamber profile (1) having at least one plastic-profile chamber (2) with a reinforcing profile (3), wherein the reinforcing profile (3) has, in the longitudinal direction of a mounting screw (11a), a leading reinforcing wall (19) and a following reinforcing wall (20),
- a door hinge (6) to be fitted to the hollow-chamber profile (1), and
- a fastening arrangement (10) for fastening a door hinge (6) according to one of Claims 1 to 8.

**11.** Fastening system according to Claim 10, **characterized in that** the leading reinforcing wall (19) and the following reinforcing wall (20) are spaced apart by a distance ($A_{AW}$) in the longitudinal direction of the at least one mounting screw (11a), where the following holds:

$$A_{AW} < L_{MS}.$$

**Revendications**

**1.** Ensemble de fixation pour fixer une penture (6) au niveau d'un profilé à chambre creuse (1) présentant au moins une chambre de profilé en plastique (2), qui présente un profilé de renforcement (3) avec au moins une paroi de renforcement (4),

- avec au moins une vis de montage (11a) pour fixer une partie de penture (7) au niveau du profilé à chambre creuse (1) et
- avec au moins une douille de vissage (12) pour maintenir la vis de montage (11a) présentant

-- une section de filetage extérieur (13) destinée à être insérée par vissage dans le profilé à chambre creuse (1) et
-- une section de filetage intérieur (14) pour insérer par vissage la vis de montage (11a),

- dans lequel l'au moins une vis de montage (11a) peut être insérée par vissage dans la douille de vissage (12),
- dans lequel la vis de montage (11a) présente une longueur ($L_{MS}$), qui est plus grande dans l'état monté qu'une distance ($A_{AW}$) entre deux parois de renforcement (4), se suivant l'une l'autre dans le sens longitudinal de la vis de montage (11a), du profilé de renforcement (3),

**caractérisé par**

- une cheville (26a) pour stabiliser la vis de montage (11a), dans lequel la cheville (26a) est disposée dans l'état monté au niveau de la paroi de renforcement qui suit (20), et
- au moins deux entretoises de liaison (34) pour relier la douille de vissage (12) à la cheville (26a), dans lequel les entretoises de liaison (34) sont déformables.

**2.** Ensemble de fixation selon la revendication 1, **caractérisé en ce que** la douille de vissage (12) présente une longueur ($L_{EH}$) de telle manière qu'elle s'étend dans l'état monté au moins par endroits à travers la paroi de renforcement (4).

**3.** Ensemble de fixation selon la revendication 1 ou 2, **caractérisé en ce que** le filetage extérieur de douille (17) de la douille de vissage (12) est réalisé en tant qu'un filetage extérieur de douille (17) autocoupant.

**4.** Ensemble de fixation selon l'une quelconque des revendications 1 à 3, **caractérisé en ce que** la vis de montage (11a) présente une section de pointe (22a) avec un diamètre ($D_{SP}$) et une section de tige (21a) avec un diamètre ($D_{SC}$), dans lequel s'applique : $D_{SP} < D_{SC}$.

**5.** Ensemble de fixation selon la revendication 4, **caractérisé en ce que** la section de pointe (22a) de la vis de montage (11a) s'étend dans l'état monté au moins par endroits à travers la paroi de renforcement qui suit (20).

**6.** Ensemble de fixation selon l'une quelconque des revendications précédentes, **caractérisé en ce que** la cheville (26a) présente une tête de cheville (27) et au moins un élément d'écartement (28a) se raccordant à la tête de cheville (27), dans lequel dans l'état monté de la cheville (26a), la tête de cheville (27) repose au niveau de la paroi de renforcement (4, 20) et l'au moins un élément d'écartement (28a) s'étend à travers la paroi de renforcement (4, 20).

**7.** Ensemble de fixation selon l'une quelconque des revendications précédentes, **caractérisé en ce que** la section de pointe (22a) présente un filetage de pointe (29), dans lequel dans l'état monté de la vis de montage (11a), le filetage de pointe (29) vient en prise au moins par endroits avec la cheville (26a).

**8.** Ensemble de fixation selon la revendication 6, **caractérisé en ce qu'**un filetage de cheville (33) est prévu au niveau de l'extrémité libre de l'au moins un élément d'écartement (28a).

9. Kit de penture pour fixer une penture (6) présentant

   - une penture (6) avec une première partie de penture (7) et une deuxième partie de penture (8) et
   - un ensemble de fixation (10) pour fixer la penture (6) selon l'une quelconque des revendications 1 à 8.

10. Système de fixation pour fixer une penture (6) présentant

    - un profilé à chambre creuse (1) avec au moins une chambre de profilé en plastique (2) avec un profilé de renforcement (3), dans lequel le profilé de renforcement (3) présente dans le sens longitudinal d'une vis de montage (11a) une paroi de renforcement de guidage (19) et une paroi de renforcement qui suit (20),
    - une penture (6) à installer au niveau du profilé à chambre creuse (1), et
    - un ensemble de fixation (10) pour fixer une penture (6) selon l'une quelconque des revendications 1 à 8.

11. Système de fixation selon la revendication 10, **caractérisé en ce que** la paroi de renforcement de guidage (19) et la paroi de renforcement qui suit (20) présentent dans le sens longitudinal de l'au moins une vis de montage (11a) une distance ($A_{AW}$), dans lequel s'applique : $A_{AW} < L_{MS}$.

Fig. 1

Fig. 2

Fig. 3

Fig. 4

Fig. 5

EP 3 540 160 B1

Fig. 6

EP 3 540 160 B1

Fig. 7

Fig. 8

Fig. 9

Fig. 10

Fig. 11

EP 3 540 160 B1

Fig. 12

Fig. 13

Fig. 14

**EP 3 540 160 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19607029 C1
- DE 29500691 U1
- DE 3045372 A1
- DE 9312057 U1
- DE 202005011168 U1
- EP 1669533 A2

- DE 20114976 U1
- DE 202004016119 U1
- DE 102011078832 A1
- DE 102011078830 A1
- DE 20018984 U1
- DE 2700100 A1